(19) Europäisches Patentamt

European Patent Office

Office européen des brevets

(11) **EP 0 997 235 B1**

(12) **EUROPEAN PATENT SPECIFICATION**

(45) Date of publication and mention
of the grant of the patent:
**30.08.2006 Bulletin 2006/35**

(51) Int Cl.:
**B25J 9/16** $^{(2006.01)}$   **B62D 57/032** $^{(2006.01)}$

(21) Application number: **98830658.5**

(22) Date of filing: **30.10.1998**

(54) **Circuit for generating and controlling the movement of an electro-mechanic multi-actuator system**

Schaltung zur Erzeugung und Steuerung der Bewegung eines elektromechanischen Systems mit einer Vielzahl von Betätigern

Circuit de génération et de commande de déplacement d'un système électro-mécanique à actionneurs multiples

(84) Designated Contracting States:
**DE FR GB IT**

(43) Date of publication of application:
**03.05.2000 Bulletin 2000/18**

(73) Proprietor: **STMicroelectronics S.r.l.**
**20041 Agrate Brianza (Milano) (IT)**

(72) Inventors:
• **Arena, Paolo**
**95125 Catania (IT)**
• **Caponeto, Riccardo**
**95100 Catania (IT)**
• **Fortuna, Luigi**
**96100 Siracusa (IT)**
• **Occhipinti, Luigi**
**97100 Ragusa (IT)**

(74) Representative: **Botti, Mario**
**Botti & Ferrari S.r.l.,**
**Via Locatelli, 5**
**20124 Milano (IT)**

(56) References cited:
• **GOLUBITSKY M ET AL: "A modular network for legged locomotion" PHYSICA D, 15 APRIL 1998, ELSEVIER, NETHERLANDS, vol. 115, no. 1-2, pages 56-72, XP002101253 ISSN 0167-2789**
• **ARENA P ET AL: "Autowaves for motion control: a CNN approach" ISCAS '98. PROCEEDINGS OF THE 1998 IEEE INTERNATIONAL SYMPOSIUM ON CIRCUITS AND SYSTEMS (CAT. NO. 98CH36187), ISCAS '98 PROCEEDINGS OF THE 1998 IEEE INTERNATIONAL SYMPOSIUM ON CIRCUITS AND SYSTEMS, MONTEREY, CA, USA, 31 MAY-3 JUNE 1998, vol. 3, pages 163-166, XP002101254 ISBN 0-7803-4455-3, 1998, New York, NY, USA, IEEE, USA**
• **SHIH L ET AL: "Dynamic simulation of legged machines using a compliant joint model" INTERNATIONAL JOURNAL OF ROBOTICS RESEARCH, WINTER 1987, USA, vol. 6, no. 4, pages 33-46, XP002101255 ISSN 0278-3649**
• **LEWIS M A ET AL: "GENETIC PROGRAMMING APPROACH TO THE CONSTRUCTION OF A NEURAL NETWORK FOR CONTROL OF A WALKING ROBOT" PROCEEDINGS OF THE INTERNATIONAL CONFERENCE ON ROBOTICS AND AUTOMAT, NICE, MAY 12 - 14, 1992, vol. 3, no. CONF. 8, 12 May 1992, pages 2618-2623, XP000300140 INSTITUTE OF ELECTRICAL AND ELECTRONICS ENGINEERS**

**Description**

Field of application

The present invention relates to a circuit for the generation and movement control of an electromechanical multi-actuator system, as per the preamble of claim 1.

The invention relates to a circuital architecture for the generation and control of the movement of an electro-mechanical multi-actuator system.

The invention relates to problematics of command and control of the movement of electromechanical multi-actuator systems used in robotics and in industrial automation, but could find a valid use in the field of application in the movement of any other mechanical system. Therefore, the description that follows refers to the above said specific field of application with the sole aim of simplifying its exposition.

Prior art

As is well known, recent studies in the field of neurobiology have allowed for the experimental verification and discovery of the principles which are at the heart of the movement of certain invertebrate organisms and to formalise the details of movement at cellular and molecular level through mathematical equations.

A report of these studies is described for example in an article with the title: "Mathematical Biology" by J.D. Murray and Springer-Verlag, Berlin, 1989 or in a chapter from the title: "Common principles of motor control in vertebrates and invertebrates" by G.K. Pearson in Ann. Rev. Neurosci. Vol. 16, pages 265-297, 1993.

The phenomena which preside over the movement of invertebrates and in particular the propagation of the signal to the nervous tissues, can therefore be described by means of particular solutions of differential equations to the partial derivatives in a non-linear form. Such equations are known as reaction-diffusion equations.

A reaction-diffusion equation is analytically expressed with the following formulation:

$$\frac{\partial u}{\partial t} = f(u) + D\nabla^2 u$$

$$\nabla^2 u_i = \frac{\partial u_i}{\partial x^2} + \frac{\partial u_i}{\partial y^2}$$

(1)

where: f(u) is a non-linear function of the state "u" of reaction, so-called therefore reaction function; while the term $\nabla^2 u$ is a Laplace, operator so-called "Laplacian", and represents a term of diffusion and weighed by means of the coefficient of diffusion D.

The particular solutions of such equations: that is to say, $u \varepsilon \, \Re^m$, $f \varepsilon \, \Re^m$, $D \varepsilon \, \Re^{m \times m}$ describe wavy phenomena based on self-supported oscillations which have all the characteristics indicative of a nervous impulse said autonomous wave or auto-wave. The peculiar characteristics of the auto-waves are the following: propagation in active non-linear means, and at expenses of the energy of this latter; conservation of the amplitude and of the form of the wave; absence of reflections on the walls, destruction following collisions, slow-fast dynamics.

In less differentiated organisms, such as for example Polychaetae and molluscs, it has been observed that the motion is generated by the activation or "firing" of an - extremely limited number of neural cells which make up the outer membrane of the animal. Furthermore, such outer membrane is capable of synchronising itself with impulses generated by the "motor neurons".

On the basis of these observations it is possible to confirm that the most archaic version of motion consists in the propagation of a nervous impulse along a membrane which is resistent to a means, for example water or soil, in which the locomotion occurs.

In more simpler mobile organisms, for example amongst nematodes and certain molluscs such as squid, the locomotion is induced directly by the propagation of a nervous impulse or auto-wave between neural cells distributed along the parts of the body which determine movement.

In more evoluted animals, such as insects, the neural structure responsible for the locomotion is organised at a higher level, but still determined by reaction-diffusion phenomena. In such organisms, in fact, the central nervous system includes a so-called Central Pattern Generator (CPG) which is responsible for the transition between different types of motion (slow, fast, swim, etc...).

From an analytic point of view motion is determined, at a local level, by the propagation of an auto-wave via the neurons responsible for locomotion while, at a central level, the type of auto-wave is determined by a dynamic phenomenon of generation of trajectories or spatial patterns denominated Turing pattern. This is all described in the literature of an article by A. Turing entitled: "The chemical basis of morphogenesis".

Until today the biological phenomena previously described have been studied mostly for analytical aims.

In this respect, a known solution approach is disclosed in the article by P. Arena et al. Having title: "Autowaves for motion control: a CNN approach ISCAS '98" - Proceedings of the 1998 IEEE International Symposium on Circuits and Systems (Cat. No. 98CH36187), ISCAS '98 , Monterey, CA, U.S.A., May 31 - June 3, 1998, vol. 3, pages 163-166.

However, even this document handles the problem from a theoretical point of view without taking in due consideration the difficulties involved with a possible implementation by the use of electronic means.

The aim of the present invention is to apply the principles which are the basis of the movement of certain invertebrate organisms to the movement of mechanical or electromechanical systems.

At the moment, the movement of all mechanical systems which find a use in the field of robotics or of industrial automation occurs by means of microprocessor digital systems which command and control the synchronisation of the movement. Such digital systems are suitably programmed in such a way that the mechanical system piloted by them can carry out a series of predetermined operations or follow a predefined trajectory of movement.

Though advantageous under various aspects, these solutions actually present a series of problems detailed hereinbelow:

- the cost of control rises in parallel with the complexity of the movement required in terms of the number of actuators required and of variables of state to be controlled;

- the structure of the actuating system is not very flexible.

The technical problem which is at the basis of the present invention is that of devising a circuit having structural characteristics such that will allow for the command and control of the movement of a multi-actuator electromechanical system overcoming the limits and problems of digitally controlled mechanical robotic systems proposed by the prior art.

Summary of the invention

The resolutive idea at the basis of the present invention is that of using the analytical representation and the mathematical model which describe the phenomenon of locomotion in invertebrates in order to have an analogic device which allows for the control of the movement of multi-actuator mechanical systems.

More in particular, the idea becomes concrete in electronically generating space-temporal dynamics of the auto-wave or Turing pattern type, obtained by means of numeric resolution of differential equations of relation-diffusion and by means of an analogic cell circuit destined for operating a spatial discretization of the system of equations.

The solution idea at the basis of the present invention is therefore that of implementing a circuital architecture for the generation and control of auto-waves for movement, characterised by a distributed circuital structure, of the cellular type, based on a mathematical model of reaction-diffusion equation of the type seen in (1).

On the basis of such an idea, the technical problem is resolved by a circuital architecture of the type indicated in claim 1 and following The features and advantages of the circuit according to the invention will become clear from the description following herein, of an example of embodiment reported with reference to the attached drawings as indication and not limitation of the invention.

Brief description of the drawings

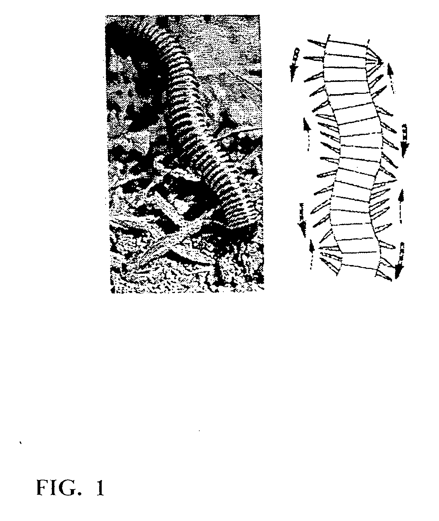

- Figure 1 shows a partial schematic view from above of a small invertebrate animal in a phase of locomotion;

- figure 2a shows a diagram in two dimensional phase which illustrates the dynamics on a phases plane of a state variable associated to a single generator cell of auto-waves in accordance with the principles of the present invention;

- figure 2b shows a temporal diagram which illustrates an analysis of the dynamics in the dominion of time of a state variable associated to a single generator cell of auto-waves in accordance with the principles of the present invention;

- figure 3 shows a view in schematic blocks of a circuital architecture produced in accordance with the present invention;

- figures 4A, 4B, 4C, 4D, and 4E respectively show views of photographic representation in temporal succession inherent to a laboratory prototype of a multi-actuator robot (worm) controlled by the architecture in figure 3 and capable of moving by means of the propagation of an auto-wave;

- Figures 5A, 5B and 5C respectively show schematic views of photographic representations in temporal succession inherent to a laboratory prototype of a conveyor belt which is capable of moving itself on the basis of an auto-wave propagation.

- figure 6 is a schematic view of an example of spatial (labyrinth) pattern generation and of the relative propagation of an auto-wave for the search of a predetermined trajectory;

- figure 7 is a photographic representation in perspective view of an example of embodiment of a laboratory prototype of an Hexapoda which is capable of walking slowly, fast and even swimming;

- figure 8 shows a schematic view of an example of embodiment, in integrated form, of a 3x3 matrix of cells incorporated into the architecture of figure 3;

- figure 9 shows a schematic view of an example of embodiment in integrated form of the analogic cell of figure 8;

- figure 10 shows a schematic view of an example of embodiment in integrated form of the Laplacian operator, with analogic programming, of figure 9;

- figure 11 shows a schematic view of an example of embodiment in integrated form of a non-linear function associated to each single cell of figure 9;

- figure 12 shows a schematic view of an example in integrated form of a particular circuital block of current scaling which allows the programming of parameters of inter-connection between adjacent cells, as also to the inside each single cell, in the architecture according to the invention.

Detailed description

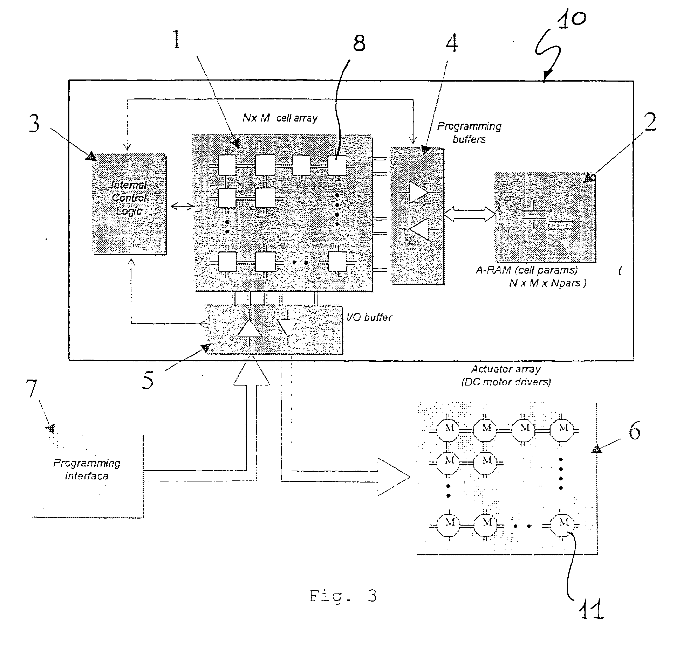

With reference to such figures, and in particular to the example in figure 3, with 10 the architecture of an analogic circuit is wholly and schematically indicated produced in accordance with the present invention for the control of the movement of an electromechanical multi-actuator system 6.

The architecture 10 is preferably produced in the form of an integrated circuit.

More in particular, the present invention provides the means for reproducing in an artificial form, the control of complex phenomena which are the basis of the locomotion of biological organisms. In this context, the architecture 10 can be considered as the central nervous system of control of the electromechanical system 6 in charge for the movement.

However, the architecture 10 can be mounted on board system 6 and driven by the system 6 itself.

The electromechanical system 6 must be considered as a group of actuators produced in any way and with any technology. For example, actuators can be: piezoelectric, electric motors, or actuators for microrobotic applications, which call for generally fast dynamics, as also actuators for robotic applications and industrial automation, characterised by slower responses.

It is important also to premise that in the description hereinbelow, with the term auto-wave, we intend to identify the generation and propagation, in an active means, of a phenomenon of wavy type based on the interaction between analogic cells locally interacting and belonging to the electromechanical system 6 as a whole which is equipped with a high number of actuators.

The outline of the principle in figure 3 refers to the circuital architecture 10 in its most general form and which allows the generation and control of the movement of the electromechanical system 6 on the basis of the principles which will be clearer hereinbelow.

The architecture 10 comprises a first block 1 formed by a matrix of N x M analogic cells 8, locally interconnected. The cells 8 represent the heart of the architecture. Each cell 8 circuitally implements a model of differential equations.

The basic model of the single cell 8 is described by the following dynamic system with two state variables for each cell. Furthermore, a non-linear relation is foreseen between the state variables and the output corresponding for each cell:

$$\frac{\partial x_{1;i,j}}{\partial t} = -x_{1;i,j} + A_{1,1;i,j} \cdot y_{1;i,j} + A_{1,2;i,j} \cdot y_{2;i,j} + i_1 +$$
$$+ D_1 \cdot \left( y_{1;i+1,j} + y_{1;i-1,j} + y_{1;i,j+1} + y_{1;i,j-1} - 4 y_{1;i,j} \right)$$

$$\frac{\partial x_{2;i,j}}{\partial t} = -x_{2;i,j} + A_{2,1;i,j} \cdot y_{1;i,j} + A_{2,2;i,j} \cdot y_{2;i,j} + i_2 +$$
$$+ D_2 \cdot \left( y_{2;i+1,j} + y_{2;i-1,j} + y_{2;i,j+1} + y_{2;i,j-1} - 4 y_{2;i,j} \right)$$

$$\forall i, = 1..M, j = 1..N \qquad (2)$$

In matrix 1 the total number of lines is indicated with M and with N the total number of columns of the cell array and

$$y_{k;i,j} = 0,5 \; ( |x_{k;i,j} + 1| + |x_{k;i,j} - 1| )$$

being $A_{k,l;i,j}$ the parameters, programmable, of the interconnections between the adjacent cells and $x_{1;i,j|t=0} = x_{10}$, $x_{2;i,j|t=0} = x_{20}$ the initial states of the generic cell in the i-th line and the j-th column, these also being programmable from the outside.

For particular parameter values of the series of equations (2) the state variables of the single cell (in the absence of diffusion) describe a limit cycle, characterised by a dynamic of the "slow-fast" type, or a dynamic in which two dynamic processes coexist with notably different kinetic characteristics.

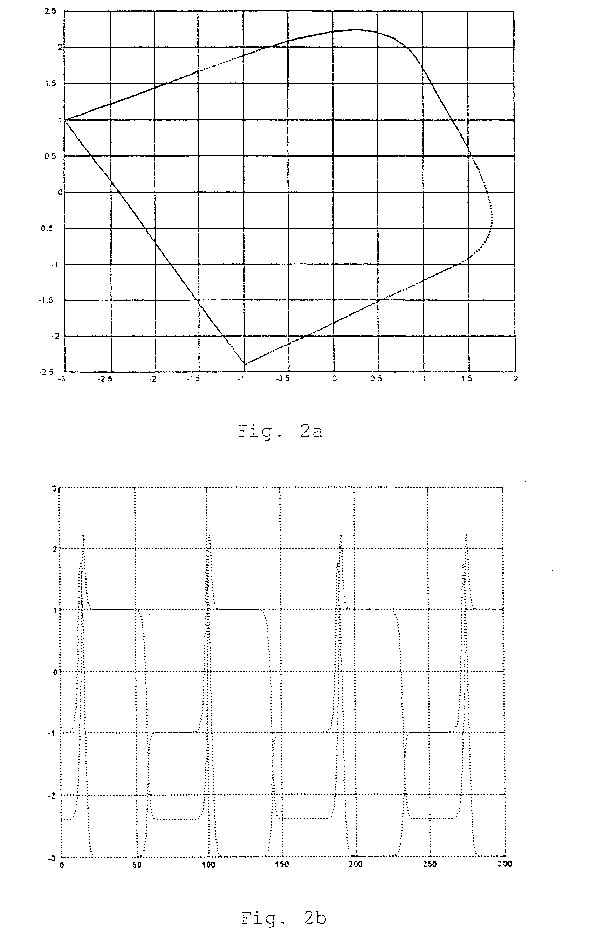

As an example figures 2a and 2b show the dynamics in the plan of the phases and in the dominion of time assumed by the variables of state of a generic cell.

The effect of the currents i1 and i2 essentially consists in one movement of the focus of the limit cycle shown in figure 2a.

It has been surprisingly ascertained that the dynamic action of each single cell, together with a diffusion phenomenon between the cells themselves, provokes a global behaviour assimilable to a phenomenon of reaction-diffusion which finds similar characteristics in various chemical-physical phenomena and in the propagation of autonomous waves which generate movement.

The interaction between adjacent cells, through a process of spatial diffusion, in fact allows the propagation of the oscillations from one cell 8 to another of the series allowing the generation of a wavy phenomenon with auto-wave characteristics.

The invention is embodied therefore in the realisation of a programmable electronic device corresponding to the architecture 10 capable of generating a predetermined sequence of wavy phenomena which allow the control of actuators 11 for locomotion. The programming of one such device is intended in the sense of providing a suitable group of initial and boundary conditions, and to further foresee a specific programming of the constitutive parameters of each single cell 8.

In particular, the model of the single cell 8 is characterised by the group of two equations (2) and (3) and contains two terms respectively corresponding to a "reaction" component, which generates a dynamic phenomenon of the oscillating type, and a spatial "diffusion" component, which determines the propagation of the auto-wave through the distributed group of cells 8 and therefore of the actuators 11.

As far as the reaction component is concerned, as reported in figures 2a and 2b, the oscillations generate for certain combinations of parameters $A_{kl;ij}$ of the series of equations (2) are characterised by a so-called "slow-fast" dynamic which means that the route of the cycle limit can occur at a high speed in correspondence to certain zones and a slower speed in correspondence to other zones.

The coupling of such phenomenon with a spatial diffusion of the output components $Y_{1;ij}$ and $y_{2;ij}$ of each cell 8, produced via the "Laplacian" operator discretized as a series of equations (2) is weighed with two different coefficients of diffusion $D_1$ and $D_2$ for each cell. In this way, the method according to the invention allows for the generation of the desired phenomenon correspondent to an auto-wave signal to be put together with the distributed group of actuators 11 for generation of movement of the entire electromechanical system 6.

Therefore, each cell 8 communicates with the cells adjacent to it by means of each component of the variables of state and, more in particular, the cells 8 communicate amongst themselves via variables of state filtered by a non-linear function.

The cells 8 are substantially all the same except those placed along the external borders of the matrix, the boundary conditions of which can be specified according to the particular way of operation, for example: generation of auto-wave, generation of spatial patterns, control of auto-wave. The programming of the parameters of interconnection between the cells, but also of the parameters of diffusion and of the initial conditions can be made by means of suitable memory devices destined to contain such information. For example, the block 2 in figure 3 represents a volatile analogic memory which is connected to the matrix 1 by means of a programming buffer interface 4.

The unit of analogic memory 2 comprises a group of cells 9 capable of memorising the states of the single cells 8 of the matrix 1 as well as the group of parameters of interactions between cells close to each other ($A_{ij:kl}$) U(ij) and of the coefficients of diffusion $D_1$ and $D_2$. The coefficients of diffusion can be considered the same for all of the cells 8.

Unit 2 can be placed both externally to the architecture 10, as internally. In the case of unit 2 being internal the pattern of information in reading and writing is managed by an internal control unit 3. But, if the unit 2 should be external, suitable interfaces 4 and 5 described later hereinbelow allow for the communication with unit 2 for transferring the information necessary for the management of the units of actuation from and to the matrix 1 cells.

The control unit 3 is therefore responsible for the management of all the operations of internal data exchange to architecture 10, as also of all the operations with the outside. Unit 3 is also responsible for all the operations of reconfiguration of the matrix of cells 8, as well as of the management of initial conditions and of the boundary conditions during the generation of dynamic spatial-temporal phenomena according to the invention.

The programming buffer interface 4 is instead responsible for the management of the flow of data from and to unit 2 of memorisation during the configuration operations of the parameters of the matrix 1 (read from memory) and also during the phases of transferral of values of the parameters memorised.

The other interface 5 is a buffer of input/output for the management of the flow of data from and to the outside, for example towards a network of actuators piloted by suitable circuits, as well as a possible interface 7 of programming. Such interface 7, together with the circuits inside system 6, allows the state capabilities internal to each cell 8 of the matrix 1 to be put together with external capabilities with the aim of possibly slowing down the speed of propagation of the auto-wave in accordance with the particular group of actuators used.

As already said, system 6 comprises essentially of a network of actuators 11 to be coupled with cells 8 of the matrix 1 in order to transfer the signals corresponding to the respective variables of state directly onto the particular mechanical system responsible for locomotion. Each actuator 11 contains a corresponding circuit of driving structured so that an input signal can be transferred into an output signal having more power for the control of the actuators. The actuator 11 can be for example continuous current motors (DC) associated to corresponding PWM drivers.

The interface circuit 7 is responsible for the programming of the architecture 10, or for the transferral from the outside, for example from a PC or from a remote control unit, to the memory block 2 of a group of parameters inherent to the initial conditions and/or of the instructions for the management of the cells 8 during the phase of reconfiguration and real time control of the movement.

On the basis of what has been written herein so far, it can deduced that the basic idea of the present invention is made concrete in the implementation of systems and electronic circuits starting from mathematical models which describe the corresponding phenomena of biological locomotion through equations of reaction-diffusion of the type stated in equation (1).

It is possible for example, to produce robotic systems with a high degree of complexity of the "walking robot" type with six feet (hexapede) capable of reproducing in a natural way the movement of insects, even in the presence of obstacles or in the case of non-homogeneity of the vehicle.

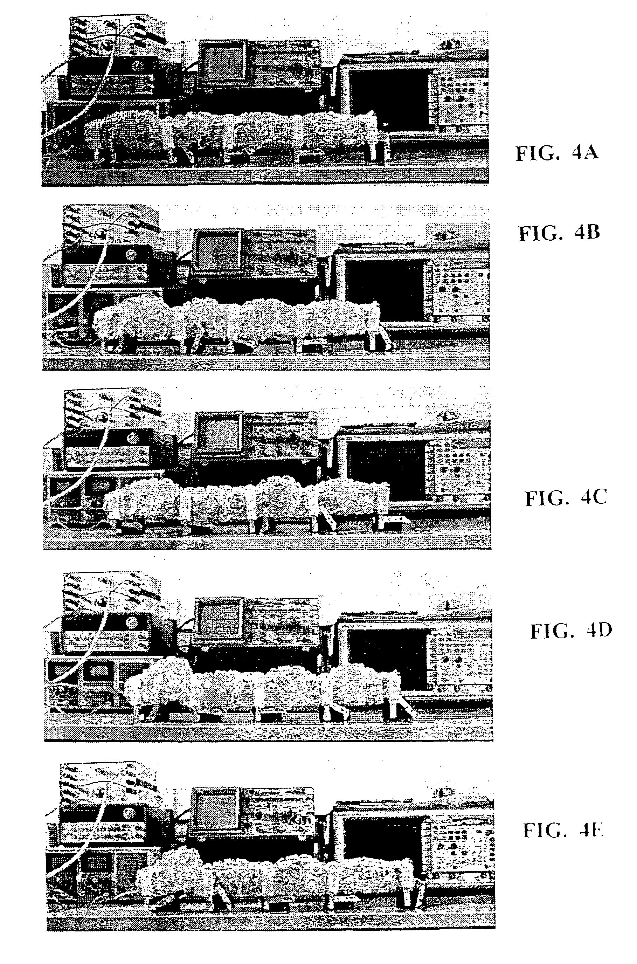

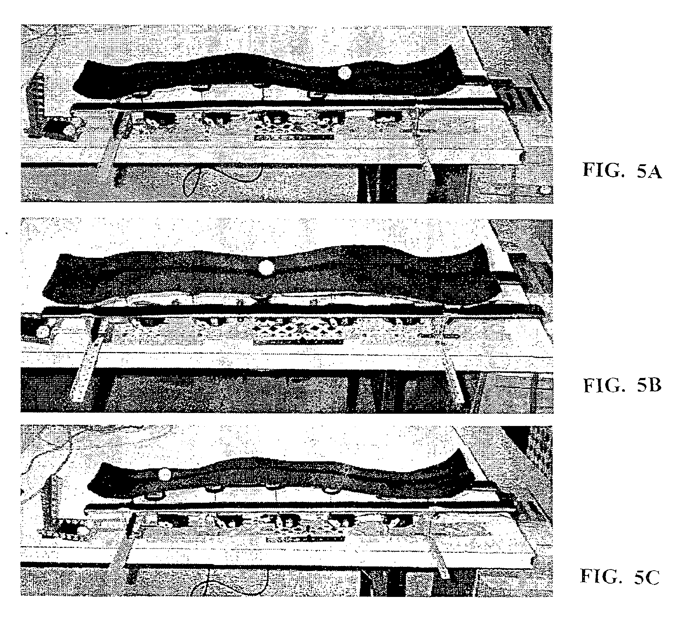

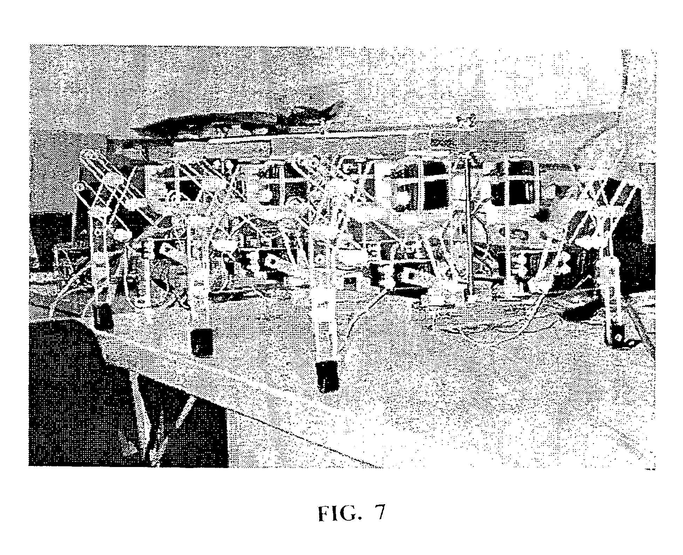

For example, the various indexed figures 4 and 5, as also figures 7, show some photographic representation of prototypal examples of mechanical systems 6 controlled by the same architecture 10 and produced at the premises of the applicant.

In figures 4A and 4E it is stated for example in photographic temporal succession the movement of a prototype robot which accurately reproduces the movement of a Polychaetum ; that is to say an earthworm.

In this example of embodiment, illustrated only as an indication and not a limitation, the system 6 comprises five rings interconnected to each other and ten legs, two for each ring. The prototype is actually able of moving autonomously by means of the propagation of an auto-wave via the rings. The auto-wave is generated by an electronic card with discrete elements which implements the architecture 10 previously described. The propagation of the wave by means of a vehicle of cells is drawn out to directly guide the servo-actuators of the constructed robot.

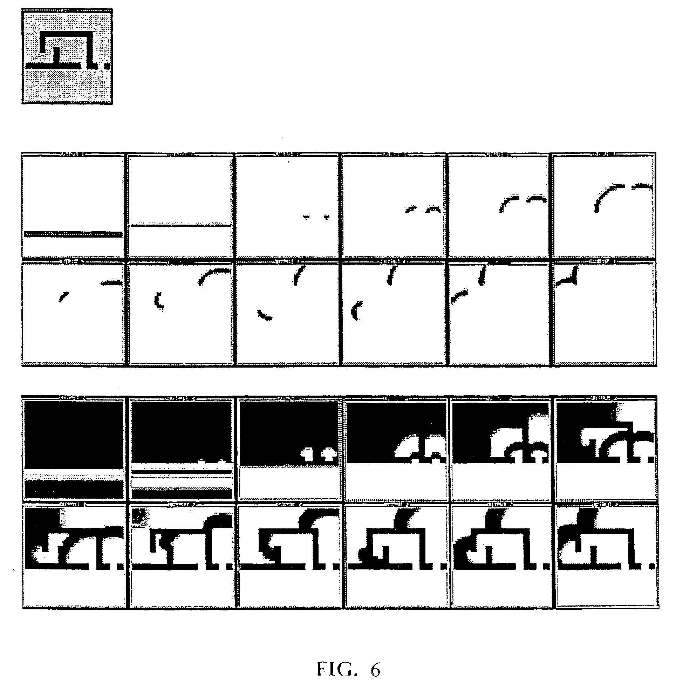

Figure 6 represents a simulation of the phenomenon of propagation of an auto-wave in a medium characterised by a pathway (for example a labyrinth) for controlling the movement of objects on a two-dimensional conveyor belt.

Let us suppose for example that we want to move two (or more) objects from a whatever position to another, further following arbitrary trajectories. The architecture 10 according to the invention allows us to impose the desired trajectory on the object via a "mask", shown in figure 6, which is applied at the input of the circuital device.

More in particular, the dark areas of figure 6 represent forbidden zones for the propagation of the auto-wave, while the light areas represent zones where the auto-wave can propagate.

In this way, the auto-waves can cross the tape only by moving themselves in the directions defined by the mask and, since the objects to be transported travel on the fronts of the waves, these are effectively transported in the direction foreseen.

The mask can also be varied in real time thanks to the characteristics of programmability of the architecture according to the invention.

A significant advantage of this type of "transport" is given by the fact that the auto-waves are not subject to reflection and the walls of the labyrinth which delimit the trajectories of the objects do not represent any source of disturbance or obstacle to the movement.

For a more complete description, but still only purely as an example, some diagrams are shown relative to the implementation in integrated form of the circuitry incorporated in the architecture 10 according to the invention.

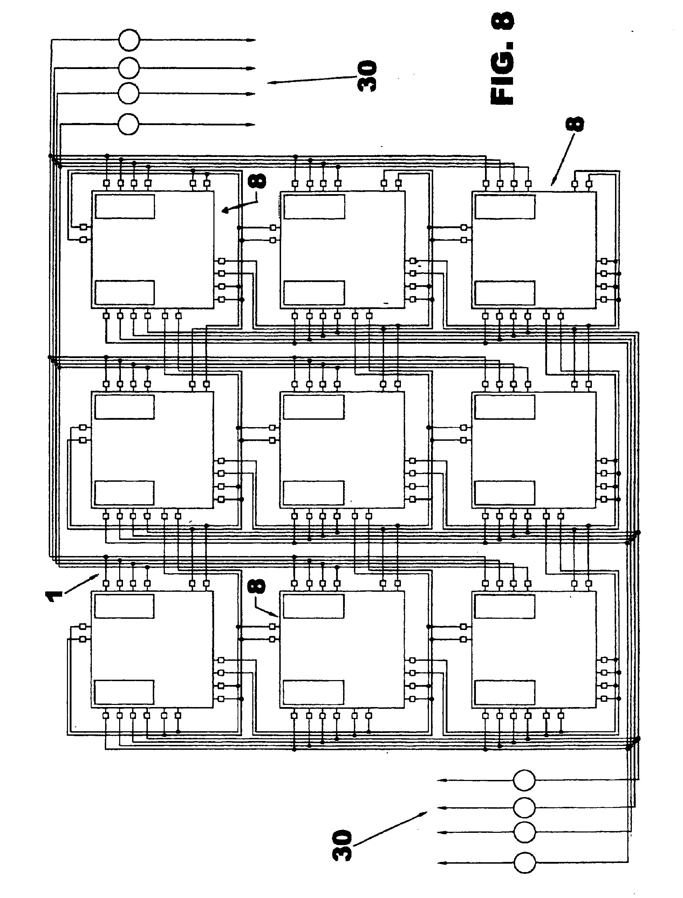

The circuits which constitute the "heart" of architecture 10 are shown in figures 8 to 12 which show diagrams of the corresponding integrated circuital portions of the architecture itself. Matrix 1 shown in figure 8 foresees programming input indicated with 30.

Each cell 8 being part of the matrix 1 is conceived, starting from the mathematical equations (2) and (3) previously described, keeping in mind the functionality of the whole integrated circuit, as well as the specifications in terms of accuracy on the parameters which can guarantee the operation in dynamic running.

Furthermore, the time constants typical of the circuit being determined essentially by the product R*C, with maximum values of the parameters of $R \cong 10^2$ KOhm (for an active resistor) and $C \cong 10^1$ pF (for an oxide capacity), supplying values in the order of $10^{-6}$ sec, an external use is foreseen, of parallel capacitors to each state capacity of the cells of the matrix in a number equal to 2* (number of actuators).

The values of such capacitors will be determined, each time, according to the specific needs in terms of speed response of the network of actuators.

For example, it could be possible to use capacitors with values which go from a few nanofarads, for microrobotic applications (Rc of about 1msec), up to values in the order of microfarads, for robotic applications and traditional control (RC of about 1 sec).

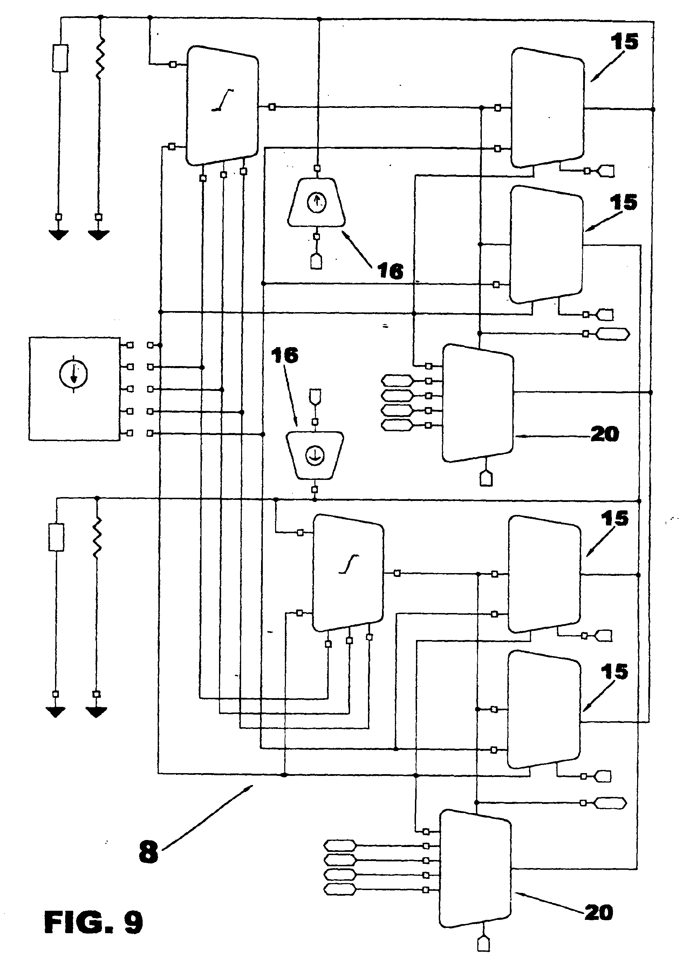

A circuital diagram of a single cell in integrated version with control of the current-node type is shown in figure 9.

As is perfectly clear from the figure, the programmability of the parameters of the single cells 8 are guaranteed both by blocks 15 of programming driven by signals of the analogic voltage type (eg. Blocks of "current scaling") and blocks 16 (of "biasing"), both via blocks 20 (Laplacian operator) that produce the iterations between the nearby cells scalable by means of a digital word inherent to the parameters of diffusion.

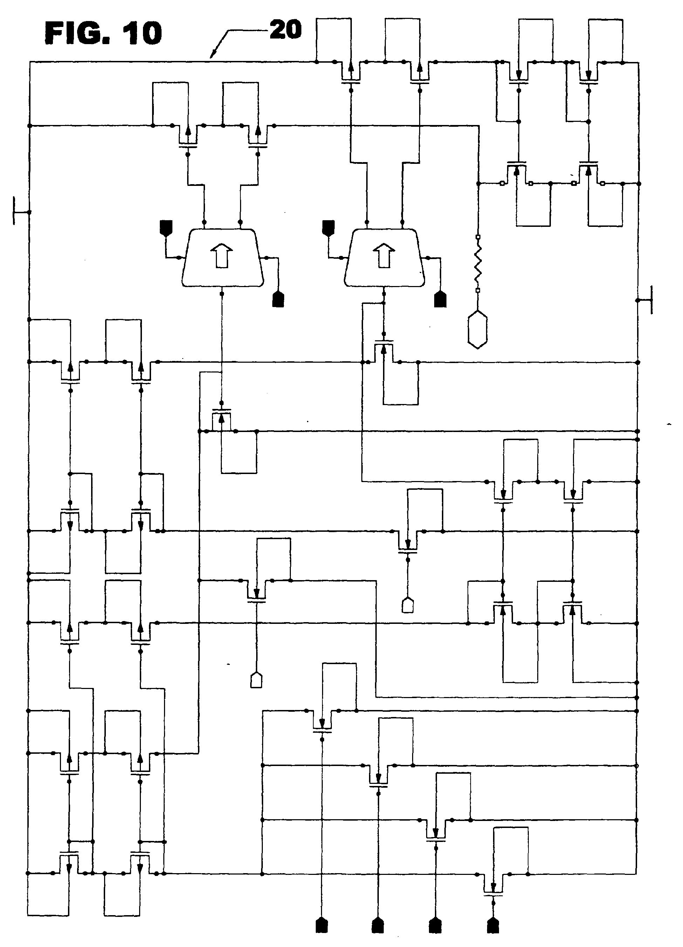

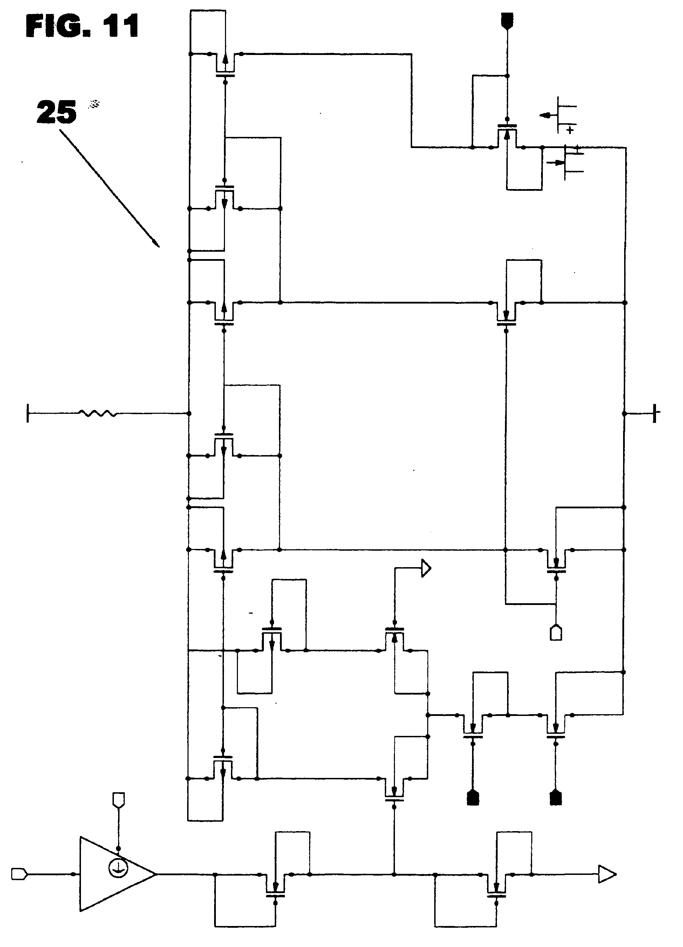

Figure 10 shows a schematic view of an example of embodiment in integrated form of the laplacian operator 20, with analogic programming; while figure 11 shows a schematic view of an example of embodiment in integrated form of a non-linear function 25 associated to each single cell of figure 9.

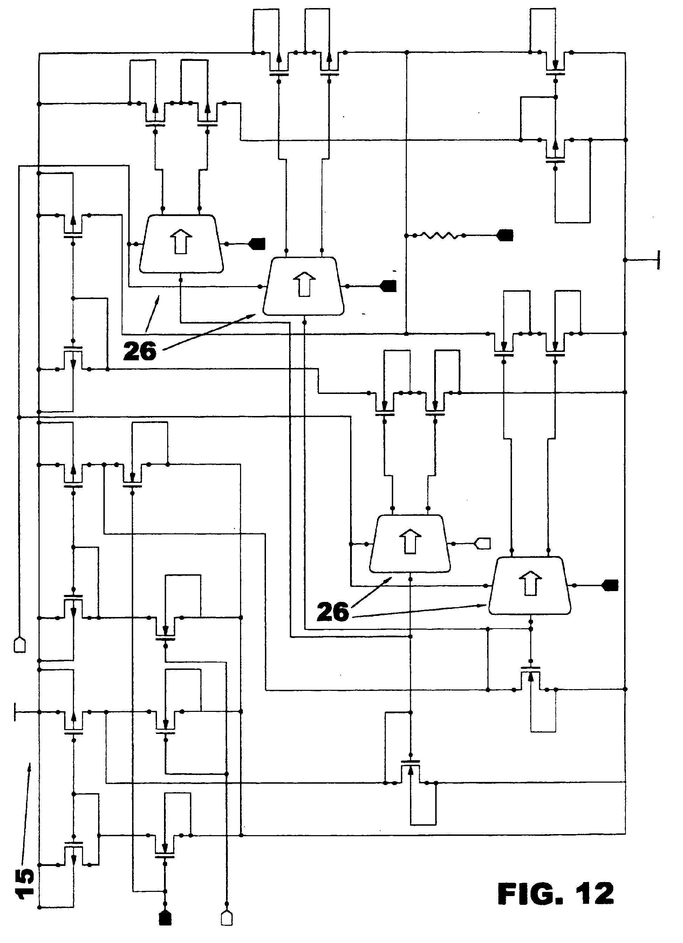

Figure 12 shows an example of embodiment of a block 15 of current scaling for the implementation in integrated form of the blocks of programming of the interconnection parameters between the single cells 8. Such block 15 comprises quadrant multipliers 26.

In short, matrix 1 together with memory block 2, with the control unit 3 and with the buffer units 4 and 5 permit the creation of an architecture 10 for the programming of the system of generation and control of the auto-wave. The integrated circuit which implements such architecture is designed to be directly connected to unit 6 of external actuation comprising actuation motors coupled to the single cells 8, driver circuits for each actuator capable of modifying the propagation speed of the waves via the coupling of external capacitors in parallel to the single state capacitors inside the circuit.

The circuital solution proposed by the invention is in short a dedicated architecture which is opposite to structures of general purpose calculation (eg.

Microprocessor digital systems). In this way it is possible to act in real time through gthe generation and the control of the movement of the mechanical system 6 , even if this is complicated.

The circuital architecture according to the invention resolve the technical problem and reach numerous advantages herein highlighted.

The characteristics which make the present invention particularly suitable for the most varied of fields of application are many.

In the first place, the modular nature of the circuital structure permits the creation of an architecture based on a fundamental module comprising a certain number of analogic interconnected cells, but in such a way as to be freely connected to several devices.

Furthermore, also the modular nature of the actuator system makes it possible to produce devices for movement comprising several single actuators. A particular cell corresponds to each actuator of the architecture 10 which controls its movement. Therefore each motion of each actuator is strictly dependent on that of the surrounding actuators thanks to the process of diffusion carried out by the interconnections between the cells 8. Therefore the whole motion is organised in the space and in the time.

Furthermore the advantage of the programmability is to be mentioned which makes it possible to carry out different "wave flows", each destined to direct itself towards particular directions. The high degree of movement controllability, in spite of the fact that the oscillations which start in the elementary circuits are in themselves autonomous dynamics, the inputs can be configured as efficient instruments for the control of direction of propagation.

In this sense the programmability constitutes a fundamental characteristic of the structure and guarantees the possibility of controlling the particular type of movement desired of the group of actuators.

From what has been said so far it emerges that the approach proposed allows modular devices to be controlled in order to make objects ("intelligent" conveyor belts) move, or robots capable of moving autonomously, emulating a good number of biologically inspired types of movement.

The absence of reflexive phenomena in the generation and propagation of the auto-waves avoids the insurgence of disturbances and makes the invention particularly suitable for the construction of supports and auxiliaries for movement.

The "in line" programmability of the inputs permit sophisticated controls in direction, giving the possibility for example, of directing more than one object, placed on a conveyor belt built with this philosophy, towards different directions according to various needs, not having to intervene in any way on the belt itself.

**Claims**

1. A circuit architecture for the generation and the control of the movement of a multi-actuator electromechanical system (6) comprising:

    an integrated matrix (1) of programmable analog cells (8), locally interconnected, each of which implements a mathematical model of differential equations of reaction-diffusion of two state variables, and each cell (8) being connected to a corresponding actuator (11) of the electromechanical system (6) for transmitting a dynamic space-temporal impulse to it of the auto-wave or Turing pattern type, **characterised by** comprising at least one unit (2) of volatile analogic memory connected to the matrix (1) via a programming interface (4); said unit of analog memory (2) comprises a group of cells (9) capable of memorizing the states of the single analog cells (8) of the matrix (1) as well as the group of parameters (Aij: k1; U(ij)) of interaction between the adjacent cells, as well as diffusion coefficients (D1, D2).

2. The circuit architecture according to claim 1, wherein there is a non-linear relation between the variable of state and the corresponding output of each cell (8).

3. The circuit architecture according to claim 1, wherein the cells of the matrix are all the same except for those placed along the external borders of the matrix (1).

4. The circuit architecture according to claim 1, further comprising a control unit (3) responsible for the management of all the operations of exchange of data inside the architecture (10), as also of all the operations with the outside, as well as of the reconfiguration of the matrix (1) of the cells (8) during the generation of the auto-wave impulses.

5. The circuit architecture according to claim 1, further comprising another interface (5) of input/output for the management of the flow of data to and from the network of actuators (11) of the electro-mechanical system (6).

6. The circuit architecture according to claim 1, further comprising a programming interface (7) for coupling some state capacitors, inside each cell (8) of the matrix (1), to outside capacitors in order to slow-down the speed of propagation of the auto-wave according to the group of actuators (11).

7. The circuit architecture according to claim 6, wherein the programming interface (7) is responsible for the programming of the architecture enabling the transferal from the outside toward the unit (2) of analotg memory, and on the command of the control unit (3), of a group of parameters inherent to the initial conditions and/or of the instructions for the management of the cells (8) during the phase of reconfiguration and control in real time of the movement.

**Patentansprüche**

1. Schaltungsaufbau zur Erzeugung und Steuerung der Bewegung eines elektromechanischen Vielstellglied-Systems (6), der aufweist:

    eine integrierte Matrix (1) aus programmierbaren, analogen Zellen (8), die örtlich miteinander verbunden sind und von denen jede ein mathematisches Modell von Differenzialgleichungen der Reaktionsdiffusion von zwei Zustandsvariablen implementiert, wobei jede Zelle (8) mit einem entsprechenden Stellglied (11) des elektromechanischen Systems (6) zum Übertragen eines dynamischen Raumzeitimpulses vom Auto-Welle-Mustertyp oder Turing-Mustertyp zu ihm verbunden ist, **dadurch gekennzeichnet, dass** er mindestens eine Einheit (2) eines flüchtigen, analogen Speichers aufweist, der mit der Matrix (1) über eine Programmierschnittstelle (4) verbunden ist, wobei die Einheit des analogen Speichers (2) eine Gruppe von Zellen (9) aufweist, die sowohl die Zustände der einzelnen, analogen Zellen (8) der Matrix (1) als auch die Gruppe der Parameter (Aij: k1; U (ij)) der Interaktion zwischen benachbarten Zellen und auch die Diffusionskoeffizienten (D1, D2) speichern kann.

**2.** Schaltungsaufbau nach Anspruch 1, worin es eine nichtlineare Beziehung zwischen der Zustandsvariablen und dem entsprechenden Ausgang jeder Zelle (8) gibt.

**3.** Schaltungsaufbau nach Anspruch 1, worin die Zellen der Matrix alle die gleichen mit der Ausnahme jener sind, die entlang der externen Grenzen der Matrix (1) angeordnet sind.

**4.** Schaltungsaufbau nach Anspruch 1, der weiterhin eine Steuereinheit (3) aufweist, die für die Verwaltung aller Operationen des Austausches von Daten innerhalb des Aufbaus (10) und auch für alle Operationen mit der Außenseite und auch für die Rekonfiguration der Matrix (1) aus den Zellen (8) während der Erzeugung der Auto-Welle-Impulse verantwortlich ist.

**5.** Schaltungsaufbau nach Anspruch 1, der weiterhin eine weitere Eingangs/Ausgangs-Schnittstelle (5) für die Verwaltung des Flusses von Daten zu und von dem Netzwerk der Stellglieder (11) des elektromechanischen Systems (6) aufweist.

**6.** Schaltungsaufbau nach Anspruch 1, der weiterhin eine Programmierschnittstelle (7) zum Koppeln einiger Zustandskondensatoren innerhalb jeder Zelle (8) der Matrix (1) mit äußeren Kondensatoren aufweist, um die Fortpflanzungsgeschwindigkeit der Auto-Welle gemäß der Gruppe von Stellgliedern (11) zu verlangsamen.

**7.** Schaltungsaufbau nach Anspruch 6, worin die Programmierschnittstelle (7) für das Programmieren des Aufbaus, der die Übertragung von der Außenseite zu der Einheit (2) des analogen Speichers ermöglicht, und auf den Befehl der Steuereinheit (3) hin einer Gruppe von Parametern, die zu den Anfangsbedingungen gehören, und/oder der Befehle der Verwaltung der Zellen (8) während der Phase der Rekonfiguration und der Steuerung in Echtzeit der Bewegung verantwortlich ist.

**Revendications**

**1.** Architecture de circuit pour la production et la commande du mouvement d'un système électromécanique à multiples dispositifs d'actionnement (6), comprenant :

une matrice intégrée (1) de cellules analogiques programmables (8), localement interconnectées, chacune d'elle mettant en oeuvre un modèle mathématique d'équations différentielles de réaction-diffusion de deux variables d'état, et chaque cellule (8) étant reliée à un dispositif d'actionnement correspondant (11) du système électromécanique (6) pour lui transmettre une impulsion spatio-temporelle dynamique du type à onde autonome ou motif de Turing, **caractérisée en ce qu'**elle comprend au moins une unité (2) de mémoire analogique volatile reliée à la matrice (1) par l'intermédiaire d'une interface de programmation (4) ; ladite unité de mémoire analogique (2) comprend un groupe de cellules (9) susceptible de mémoriser les états des cellules analogiques uniques (8) de la matrice (1) aussi bien que le groupe de paramètres (Aij : kl ; U (ij)) d'interaction entre les cellules adjacentes, aussi bien que des coefficients de diffusion (D1, D2).

**2.** Architecture de circuit selon la revendication 1, dans laquelle il y a une relation non linéaire entre la variable d'état et la sortie correspondante de chaque cellule (8).

**3.** Architecture de circuit selon la revendication 1, dans laquelle les cellules de la matrice sont toutes les mêmes à part celles placées le long des bordures externes de la matrice (1).

**4.** Architecture de circuit selon la revendication 1, comprenant de plus une unité de commande (3) responsable de la gestion de toutes les opérations d'échange de données à l'intérieur de l'architecture (10), comme également de toutes les opérations avec l'extérieur, aussi bien que de la reconfiguration de la matrice (1) des cellules (8) pendant la production des impulsions d'onde autonome.

**5.** Architecture de circuit selon la revendication 1, comprenant de plus une autre interface (5) d'entrée / sortie pour la gestion du flux de données vers et en provenance du réseau de dispositifs d'actionnement (11) du système électromécanique (6).

**6.** Architecture de circuit selon la revendication 1, comprenant de plus une interface de programmation (7) pour coupler certains condensateurs d'état, à l'intérieur de chaque cellule (8) de la matrice (1), à des condensateurs extérieurs afin de ralentir la vitesse de propagation de l'onde autonome selon le groupe de dispositifs d'actionnement (11).

**7.** Architecture de circuit selon la revendication 6, dans laquelle l'interface de programmation (7) est responsable de la programmation de l'architecture permettant le transfert de l'extérieur vers l'unité (2) de mémoire analogique, et sur la commande de l'unité de commande (3), d'un groupe de paramètres inhérents aux états initiaux et/ou des instructions pour la gestion des cellules (8) pendant la phase de reconfiguration et de commande en temps réel du mouvement.

EP 0 997 235 B1

FIG. 1

11

Fig. 2a

Fig. 2b

10

1        8        4

3

Nx M cell array

Programming
buffers

2

Internal
Control
Logic

A-RAM (cell params)
N x M x Npars )

I/O buffer

7

Actuator array
(DC motor drivers)

5

Programming
interface

6

M   M   M   M

M   M

M   M   M

Fig. 3

11

13

FIG. 4A

FIG. 4B

FIG. 4C

FIG. 4D

FIG. 4E

FIG. 5A

FIG. 5B

FIG. 5C

FIG. 6

FIG. 7

FIG. 8

EP 0 997 235 B1

**FIG. 9**

# FIG. 10

## FIG. 11

25

**FIG. 12**